# EUROPÄISCHE PATENTSCHRIFT

(11) **EP 3 728 392 B1**
(45) Veröffentlichungstag und Bekanntmachung des Hinweises auf die Patenterteilung: **29.06.2022**
(21) Anmeldenummer: 18814637.7
(22) Anmeldetag: 12.12.2018
(51) Int. Cl.: C08G 63/00, C08G 64/06, C08G 64/14, C08G 64/24, C08G 64/28

(54) **VERFAHREN ZUR HERSTELLUNG VON POLYCARBONAT**
METHOD FOR MAKING POLYCARBONATE
PROCÉDÉ DE FABRICATION DE POLYCARBONATE

(30) Priorität: 20.12.2017 EP 17209190
(43) Veröffentlichungstag der Anmeldung: 28.10.2020
(73) Patentinhaber: Covestro Deutschland AG, 51373 Leverkusen (DE)
(72) Erfinder: HEIJL, Jan, 9160 Lokeren (BE); BACHMANN, Rolf, 51469 Bergisch Gladbach (DE); MICHELE, Volker, 51065 Köln (DE); COCK, Felix, 2610 Wilrijk (BE)
(74) Vertreter: Levpat
(86) Internationale Anmeldenummer: PCT/EP2018/084552
(87) Internationale Veröffentlichungsnummer: WO 2019/121236

(56) Entgegenhaltungen:
- EP-A1- 2 098 553
- EP-A2- 0 517 044
- EP-A2- 0 520 272

## Beschreibung

Gegenstand der vorliegenden Erfindung ist ein Verfahren zur effizienten Herstellung von Polycarbonat nach der Methode des Phasengrenzflächenverfahrens in Gegenwart mindestens eines Katalysators, wobei eine geringe Mischenergie unmittelbar nach Zugabe des Katalysators in das System eingetragen wird.

Die Polycarbonatherstellung nach dem Phasengrenzflächenverfahren ist bereits von Schnell, "Chemistry and Physics of Polycarbonates", Polymer Reviews, Volume 9, Interscience Publishers, New York, London, Sydney 1964, S. 33-70; D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, VoL 18, (1980)"; S. 75-90, D. Freitag, U. Grigo, P.R. Müller, N. Nouverne', BAYER AG, "Polycarbonates" in Encyclopedia of Polymer Science and Engineering, Volurne 1 1, Second Edition, 1988, S. 651-692 und schließlich von Dres U. Grigo, K Kircher und P R- Müller "Polycarbonate" in Becker/Braun, Kunststoff-Handbuch, Band 3/1, Polycarbonate, Polyacetale, Polyester, Celluloseester, Crul Hanser Verlag München, Wien 1992, S 118-145 beschrieben worden.

Des Weiteren wird beispielsweise auch in EP-A 0517044 das Phasengrenzflächenverfahren zur Herstellung von Polycarbonat beschrieben.

Dabei erfolgt in der Regel die Phosgenierung eines in wässriger-alkalischer Lösung oder Suspension vorgelegten Di-Natriumsalzcs eines Bisphenols oder eines Gemisches verschiedener Bisphenole in Gegenwart eines inerten organischen Lösungsmittels oder Lösungsmittelgemisches, welches neben der wässrigen eine zweite organische Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert, wobei das Molekulargewicht durch geeignete Kettenabbrecher (z. B. monofunktionelle Phenole) kontrolliert werden kann. Die organische Phase wird schließlich abgetrennt und das Polycarbonat durch verschiedene Aufbereitungsschritte daraus isoliert.

Die Aufkondensierung erfolgt gängigerweise in einem inerten Lösungsmittel in Gegenwart von Alkali und einem Katalysator in der Grenzfläche. Durch entsprechende Vermischung erfolgt der erforderliche Stoffaustausch an der Grenzfläche beider Phasen. In der Regel erfolgt dies durch die Einbringung hoher Dispersionsenergie einhergehend mit hohen Schergradienten. So wird beispielsweise in der EP-A 0520272 betont, dass es von Vorteil sein kann, den Katalysator intensiv in die vorliegende Emulsion durch geeignete Mischorgane einzumischen. Auch die Beispiele der EP-A 2 098 553 unterstützen diese Lehre. Hier wird ein Schlangenrohrreaktor mit einer Dosierstelle für den Katalysator am Anfang des Reaktors verwendet. Bei einem Druckverlust von ca. 5 bar über diesen Schlangenreaktor wird nach Katalysatorzugabe eine Mischenergie von ca. 500 J/kg in das System eingetragen. Ein ähnlicher Versuchsaufbau wird in der WO 2015/110447 A1 beschrieben. Auch hier wird ein Schlangenrohrreaktor mit einer Dosierstelle für den Katalysator am Anfang des Reaktors verwendet.

Die hohen Schergradienten haben in der Regel jedoch eine schlechte Trennung der Phasen in nachfolgenden Aufreinigungsprozessen zur Folge. Damit gehen erhöhte Wassergehalte in der organischen Phase oder erhöhte Restmonomergehalte oder Kettenabbrechergehalte im Abwasser einher.

Optimierungen des Verfahrens, welche durch Verbesserung der Durchmischung und Einhaltung eines engen Temperatur- und pH-Profils als auch Isolierung des Produkts erfolgen, werden in EP1219589 A1, EP1216981 A2, EP1216982 A2 und EP784048 A1 beschrieben. Hier wird häufig nach Zugabe des Katalysators das Reaktionsgemisch durch ein mit Verengungen versehenes Rohr geleitet und dadurch ständig dispers gemischt. Beispielsweise wird in der EP1219589 in Beispiel 1 beschrieben, dass die Reaktionsmischung durch ein Rohr mit mehreren Verengungen geführt wird, wobei in etwa eine Gesamtmischenergie von 602 J/kg aufgewendet wird.

Insbesondere bei der Zugabe des Katalysators treten unerwünschte Nebenreaktionen auf. Die Katalysatorzugabe bewirkt eine starke Beschleunigung der Reaktion. Nicht reagierte (Rest)Monomere oder phenolische Komponenten können bei nicht idealer Durchführung in den beiden Phasen verbleiben.

Vor der Katalysatorzugabe werden der Mischung in der Regel noch Kettenabbrecher zugegeben. Die Zugabe des Katalysators erfolgt normalerweise am Ende der Reaktion, wenn nur noch geringe Mengen BPA vorhanden sind. Dadurch kann ein unerwünschter Stickstoffeinbau durch den Katalysator minimiert werden. Insbesondere im Hinblick auf die Herstellung hochreinen Polycarbonats, beispielsweise für optische Anwendungen, ist es jedoch notwendig, mögliche Verunreinigungen soweit wie möglich zu verhindern. Zudem ist es auch wünschenswert, dass die Abwasserströme möglichst wenig belastet sind und somit einer möglichst geringen Aufreinigung unterworfen werden müssen, um die Wirtschaftlichkeit mit einer umweltfreundlichen Verfahrensführung zu kombinieren.

Der vorliegenden Erfindung lag daher die Aufgabe zugrunde ein Verfahren zur Herstellung von Polycarbonat nach dem Phasengrenzflächenverfahren bereitzustellen, bei dem mindestens ein Nachteil des Stands der Technik verbessert wird. Insbesondere lag der vorliegenden Erfindung die Aufgabe zu Grunde, ein Verfahren zur Herstellung von Polycarbonat nach dem Phasengrenzflächenverfahren bereitzustellen, bei dem die Konzentration an unreagierten Restmonomeren im Abwasserstrom und/oder der organischen Phase und/oder dem Polycarbonat möglichst gering ist. Damit war es unter anderem eine Aufgabe, einen möglichst vollständigen Umsatz der Hauptreaktion zu erzielen. Ebenso war es wünschenswert, dass bevorzugt gleichzeitig der Verbleib der phenolischen Komponenten in der wässrigen Phase minimiert wird. Darüber hinaus war es wünschenswert, eine gute Auftrennung der Emulsion in organische und wässrige Phase in Folgeschritten des Verfahrens gewährleistet zu können.

Mindestens eine, bevorzugt alle der oben genannten Aufgaben wurden durch die vorliegende Erfindung gelöst. Überraschend wurde gefunden, dass im Bereich der Katalysatorzugabe eine Verringerung des Energieeintrages in das System bei gleichzeitiger homogener Einmischung des Katalysators zu der erfindungsgemäßen Reduktion der phenolischen Komponenten in der wässrigen Phase führt. Gleichzeitig konnte die Emulsion hervorragend wieder in zwei Phasen getrennt werden.

Es ist bekannt, dass eine rasche Reaktion an der Grenzfläche zweier Phasen einen sehr guten Stoffaustausch zur Phasengrenze hin und von der Phasengrenze weg erfordert. Daher sehen etablierte Lösungsansätze vor, im Bereich der Katalysatorzugabe eine hohe Dispersionsenergie einzubringen, die infolge der intensiven Vermischung diesen Stoffaustausch gewährleistet. Durch gleichzeitig hohe Schergradienten wird zusätzlich das Phasengefüge und die sich ausbildende Phasengrenze beeinflusst.

Beim erfindungsgemäßen Verfahren konnte überraschenderweise festgestellt werden, dass entgegen dieser etablierten Vorgehensweise die homogene Vermischung des Katalysators mit vergleichsweise niedriger Mischenergie und gleichzeitig niedrigen Scherraten zu einer höheren Selektivität der Reaktion führt. Das Verfahren bietet zusätzlich den Vorteil, dass eine bessere Trennbarkeit der Emulsion in den Folgeschritten einhergeht und letztlich auch eine Verringerung an unerwünschten Komponenten (z. B. (Rest)Monomer und/ oder phenolische Komponenten) sowohl in der wässrigen als auch in der organischen Phase erfolgt. Daraus resultiert zum einen ein deutlich geringerer Aufwand der Aufarbeitung der wässrigen und organischen Phasen bzw. des hergestellten Polycarbonats. Zum anderen bedeutet dies aber auch, dass die eingesetzten Edukte vollständiger umgesetzt werden und diese höhere Ausbeute in einem geringeren Verlust an Edukten (bspw. Phosgen und Bisphenol A) resultiert (erhöhte Selektivität).

Gemäß der vorliegenden Erfindung wird daher ein Verfahren zur Herstellung von Polycarbonat nach dem Phasengrenzflächenverfahren in Gegenwart mindestens eines Katalysators bereitgestellt, welches dadurch gekennzeichnet ist, dass unmittelbar nach der gegebenenfalls ersten Zugabe des mindestens einen Katalysators innerhalb eines Zeitraums von 2 bis 1200 s 0,01 bis 20 J/kg Mischenergie in das mindestens einen Katalysator enthaltende System eingetragen wird.

Im Rahmen der vorliegenden Erfindung wird unter der Eintragung von Mischenergie in einem Bereich von 0,01 bis 20 J/kg verstanden, dass eine geringe Vermischung der Phasen miteinander vorliegt. Dies bedeutet, dass immer eine Mischenergie von größer 0 J/kg eingetragen wird. Bevorzugt wird unter der Eintragung von 0,01 bis 20 J/kg Mischenergie verstanden, dass eine Homogenisierung stattfindet. Besonders bevorzugt erfolgt dies ohne eine gleichzeitige Dispergierung. Der Fachmann ist in der Lage, auf Basis der Dichte einer PC-Lösung bei 25 °C von 1,22 g/cm³ J/kg in W/m³ umzurechnen. Dem Fachmann sind die Begriffe Homogenisierung und Dispergierung bekannt. Bevorzugt wird unter dem Begriff "Homogenisierung" verstanden, dass ein Zustand angestrebt, bevorzugt erhalten wird, in dem die Konzentrationen der einzelnen Komponenten der Zusammensetzung innerhalb eines beliebigen Volumenelementes der wässrigen oder aber der organischen Phase im Wesentlichen gleich ist. Bevorzugt wird hier unter dem Begriff "im Wesentlichen" eine Abweichung der Konzentration der einzelnen Komponenten der Zusammensetzung eines beliebigen Volumenelementes von höchstens 5 %, bevorzugt höchstens 3 % und besonders bevorzugt höchstens 1 % verstanden. Dabei ist es weiterhin bevorzugt, dass die Phasengrenzfläche zwischen der wässrigen und organischen Phase möglichst gering ist. Ebenso bevorzugt wird unter dem Begriff "Dispergierung" die Bildung einer Emulsion aus der wässrigen und der organischen Phase verstanden, wobei die wässrige und organische Phase noch die weiteren Komponenten zur Herstellung des Polycarbonats enthalten können. Beispiele für eine solche Emulsion sind die Öl-in-Wasser- oder die Wasser-in-Öl-Emlusion. Diese Emulsion ist bevorzugt stabil. Dies bedeutet, dass sie sich über einen Zeitraum von mindestens 30 min. nicht sichtbar entmischt. Damit unterscheidet sich eine Homogenisierung von einer Dispergierung bevorzugt darin, dass bei der Homogenisierung kein Konzentrationsgradient irgendeiner gelösten Substanz innerhalb einer der Phase vorliegt und dabei eine möglichst geringe Phasengrenzfläche zwischen den Phasen vorliegt. Erfindungsgemäß wird unter einer Mischenergie, welche größer als 20 J/kg ist, bevorzugt eine Dispersionsenergie verstanden.

Besonders bevorzugt beträgt die Mischenergie 0,4 bis 20 J/kg, weiterhin bevorzugt 2 bis 10 J/kg und insbesondere bevorzugt 4 bis 6 J/kg.

Dabei ist der Fachmann in der Lage, eine entsprechende Scherrate zu berechnen, wenn ein Reaktor vorgegeben ist.

Erfindungsgemäß sind die angegebenen Mischenergien Mittelwerte. Dies bedeutet, dass höhere Werte oder auch niedrigere Werte der Mischenergie bevorzugt nicht ausgeschlossen sind. Diese können auch gegebenenfalls nur kurzzeitig auftreten. Erfindungsgemäß werden die Mittelwerte bevorzugt über ein gesamtes Reaktorsystem gebildet. Daher wird die Mischenergie an entsprechenden Randzonen oder auch Einbauten mit eingerechnet.

Erfindungsgemäß konnte gefunden werden, dass die Größe der Phasengrenzfläche, welche aus der niedrigen Mischenergie resultiert, zum einen vorteilhaft ist für die spätere Abtrennung der wässrigen und organischen Phase. Gleichzeitig konnte aber auch gefunden werden, dass dadurch, dass mit dem erfindungsgemäßen Verfahren die Konzentration an nicht reagiertem Monomer gering gehalten wird, eine solche Abtrennung noch einfacher ist. Es ist bekannt, dass insbesondere Bisphenol A, welches das Standardmonomer bei der Herstellung von Polycarbonat darstellt, als Emulgator wirken kann. In diesem Sinne stabilisiert es die Emulsion aus wässriger und organischer Phase. Dadurch, dass erfindungsgemäß eine erhöhte Selektivität verbunden mit einem erhöhten Umsatz des Monomers erzielt wird, steht weniger Monomer zur Verfügung, welches die Emulsion stabilisiert. Dies führt zu einer vereinfachten Abtrennung der wässrigen und organischen Phase. Darunter wird erfindungsgemäß unter anderem auch eine erniedrigte Konzentration von wässrigen Tröpfchen in der organischen Phase und/oder von organischen Tröpfchen in der wässrigen Phase verstanden.

Die erfindungsgemäß niedrige Mischenergie wird unmittelbar nach der gegebenenfalls ersten Zugabe des Katalysators eingetragen. Dabei bedeutet der Begriff "unmittelbar" bevorzugt, dass der entsprechende Reaktor so ausgestattet ist, dass in einem kontinuierlichen System der Katalysator so zugegeben wird, dass innerhalb von höchstens einer Sekunde die Mischenergie in das den Katalysator enthaltende Volumenelement eingetragen wird. Dies bedeutet, dass erfindungsgemäß eine Verbindung der Katalysatoreintragsstelle mit einem Reaktor, welche die erfindungsgemäßen Mischenergien realisiert, über eine sehr kurze Rohrleitung, nicht ausgeschlossen ist. Bei einem Batch-System bedeutet es bevorzugt, dass der Katalysator in ein bereits mit Mischenergie versorgten System eingetragen wird, wobei das Volumenelement, welches den Katalysator enthält, innerhalb von höchstens einer Sekunde dieser Mischenergie unterworfen wird.

Die erfindungsgemäße Formulierung "nach der gegebenenfalls ersten Zugabe des mindestens einen Katalysators" soll bevorzugt bedeuten, dass es mehrere Zugaben eines Katalysators geben kann, welche zeitlich getrennt voneinander stattfinden. Dies bedeutet beispielsweise in einem kontinuierlichen Verfahren, dass es mehrere Stellen im Verfahren gibt, an denen eine Katalysator zudosiert werden kann. In einem batch-Verfahren kann die Zugabe zu unterschiedlichen Zeitpunkten stattfinden. Dabei können bei den unterschiedlichen Zugaben des Katalysators bei jeder Zugabe jeweils der gleiche oder aber auch ein anderer Katalysator und/oder Mischungen von Katalysatoren zugegeben werden. In jedem Fall ist unter der ersten Zugabe immer die Zugabe zu verstehen, bei der zum allerersten Mal der Katalysator ins System eingetragen wird. An dieser Stelle erfolgt erfindungsgemäß das Einbringen der niedrigen Mischenergie. Bevorzugt kann jedoch unmittelbar nach jeder Zugabe mindestens eines Katalysators eine Mischenergie von 0,01 bis 20 J/kg eingetragen werden.

Bevorzugt umfasst das erfindungsgemäße Verfahren nur eine Zugabe mindestens eines Katalysators. Besonders bevorzugt handelt es sich dabei um nur einen Katalysator.

Der erfindungsgemäß eingesetzte mindestens eine Katalysator kann ausgewählt werden aus der Gruppe, bestehend aus tertiären Aminen, wie beispielsweise Triethylamin, Tributylamin, Trioctylamin, N-Alkylpiperidine (N-Ethylpiperidin, N-Methylpiperidin oder N-i/n-Propylpiperidin) und einem Organophosphin. Besonders bevorzugt ist der mindestens eine Katalysator Triethylamin und/oder Ethylpiperidin.

Die gegebenenfalls erste Zugabe des mindestens einen Katalysators , gkann vor der Phosgenierung, bevorzugt aber nach der Phosgeneintragung erfolgen. Die Dosierung des Katalysators oder der Katalysatoren kann in Substanz, in einem inerten Lösungsmittel, vorzugsweise dem oder einem derer der organischen Phase bei der Polycarbonatsynthese, oder auch als wässrige Lösung erfolgen. Im Falle der Verwendung von tertiären Aminen als Katalysator kann beispielsweise deren Dosierung in wässriger Lösung als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können auch unterschiedliche Dosierungsweisen an verschiedenen Orten oder zu verschiedenen Zeiten vorgenommen werden. Die Gesamtmenge der verwendeten Katalysatoren liegt zwischen 0,0001 und 1,0 Mol%, bevorzugt zwischen 0,001 und 0,2 Mol-%, bezogen auf Mole eingesetzte Monophenole. Bevorzugt ist das erfindungsgemäße Verfahren dadurch gekennzeichnet, dass der mindestens eine Katalysator bei der gegebenenfalls ersten Zugabe in Form einer Lösung zugegeben wird. Hierbei ist unter einer Lösung bevorzugt ein homogenes Gemisch des mindestens einen Katalysators in mindestens einem Lösungsmittel zu verstehen. Der Katalysator ist besonders bevorzugt in Methylenchlorid, Chlorbenzol oder einer Mischung aus beiden gelöst. Bevorzugt wird hierbei eine Mischung aus 2 bis 10 % bezogen auf das Lösungsmittel. Dabei hat es sich als vorteilhaft erwiesen, den mindestens einen Katalysator in Form einer Lösung zuzugeben, weil dadurch die Verteilung des Katalysators im System besser ist und somit der erfindungsgemäße Effekt noch besser erzielt werden kann.

Dabei hat es sich als vorteilhaft erwiesen, dass die Temperatur unmittelbar nach der gegebenenfalls ersten Zugabe des mindestens einen Katalysators 35 bis 45 °C beträgt. Hierdurch kann der Stickstoffeinbau durch den Katalysator verringert werden.

Die erfindungsgemäß niedrige Mischenergie wird innerhalb eines Zeitraums von 2 bis 1200 s, besonders bevorzugt 60 bis 700 s eingetragen.

Bevorzugt wird die Mischenergie mittels mindestens eines statischen Mischers und / oder mindestens eines dynamischen Mischers in das Katalysator enthaltende System eingetragen. Werden mehr als ein statischer Mischer und/oder dynamischer Mischer verwendet, so können diese hintereinander geschaltet werden.

In einer bevorzugten Ausführungsform werden 0,01 bis 20 J/kg, besonders bevorzugt 0,4 bis 20 J/kg über einen Zeitraum von 1 bis 100 s, besonders bevorzugt 2 bis 25 s mittels mindestens eines statischen Mischers in das Katalysator enthaltende System eingetragen.

In einer ebenso bevorzugten Ausführungsform werden 0,01 bis 20 J/kg, besonders bevorzugt 0,4 bis 20 J/kg über einen Zeitraum von 60 bis 1200 s, besonders bevorzugt von 120 bis 700 s mittels mindestens eines dynamischen Mischers in das Katalysator enthaltende System eingetragen. Bei dem dynamischen Mischer handelt es sich bevorzugt um einen Rührkessel.

Erfindungsgemäß ist auf die Vermeidung eines hohen Schergefälles unmittelbar nach Zugabe des mindestens einen Katalysators zu achten. Wie bereits oben erwähnt, ist der Fachmann in der Lage, bei einem gegebenen Reaktorsystem ein Schergefälle zu berechnen.

Als statische Mischer können alle dem Fachmann bekannten Typen zum Einsatz kommen. Bevorzugt sind dabei sowohl turbulenzbasierte Systeme wie z. B. Zungenringmischer als auch Systeme, die im laminaren Bereich funktionieren, z. B. helikale oder kammartig gekreuzte bzw. wabengitterartig mäandrierende Strukturen oder auch mikrostrukturierte Mischer. Übermäßig hohe Scherbeanspruchungen können bei statischen Mischern sehr gut durch die Wahl von Mischergeometrie, Strömungsgeschwindigkeit und Druckverlust vermieden werden. Die entsprechende Auswahl liegt im Wissen und Können des Fachmanns. Als Extrembeispiel eines statischen Mischers mit sehr geringer Scherbeanspruchung kann auch ein turbulent durchströmtes Leerrohr angesehen werden.

Der dynamischer Mischer wird bevorzugt ausgewählt aus der Gruppe, bestehend aus einem Rührkessel und einer Pumpe. Beim Einsatz eines Rührkessels kann die Scherbeanspruchung durch die Wahl von Rührergeometrie, Bewehrung und Rührerdrehzahl begrenzt werden, wie dem Fachmann bekannt ist; beispielhaft können Propellerrührer in einem System mit zwei Stromstörern eingesetzt werden. Aber auch andere Rührergeometrien wie Schrägblattrührer oder Scheibenrührer können Verwendung finden. Als dynamische Mischer können aber auch Pumpen fungieren, wobei beispielhaft bei Kreiselpumpen die Scherbeanspruchung durch Wahl von Umfangsgeschwindigkeit des Pumpenlaufrads und Spaltweite zwischen Laufrad und Gehäuse beeinflusst werden kann.

Erfindungsgemäß ist es bevorzugt, dass das Verfahren kontinuierlich betrieben wird. Vorteilhafterweise kann der Effekt dieser Erfindung einfach in bestehenden kontinuierlichen Anlagen umgesetzt werden. Diese sehen häufig Dispergatoren zur Einbringung des Katalysators ins System vor, bei denen die Lösung durch kleine Löcher einer Lochblende gepumpt werden, so dass möglichst kleine Tröpfchen entstehen. Durch die einfache Vergrößerung dieser Löcher zur Reduzierung der Mischenergie kann der Effekt der vorliegenden Erfindung auf einfache Weise in bestehenden Anlagen realisiert werden.

Weiterhin bevorzugt ist das erfindungsgemäße Verfahren dadurch gekennzeichnet, dass das Verfahren die Schritte
(a) Erzeugung einer Mischung einer organischen und einer wässrigen Phase, wobei die organische Phase zumindest Phosgen und gegebenenfalls mindestens einen Kettenabbrecher und die wässrige Phase zumindest mindestens ein Dihydroxydiarylalkan, Alkalilauge und gegebenenfalls mindestens einen Kettenabbrecher enthält,
(b) Umsetzung des Phosgens mit dem mindestens einem Dihydroxydiarylalkan in der aus Schritt (a) erhaltenen Mischung, gegebenenfalls unter Zugabe mindestens eines Kettenabbrechers und/oder weiterer Alkalilauge und
(c) mindestens eine Zugabe mindestens eines Katalysators umfasst, wobei der Schritt (c) vor Schritt (a) und/oder nach Schritt (b) erfolgt.

Die Dispergierung der zwei Phasen (wässrige und organische Phase) im Schritt (a) kann bevorzugt durch eingebaute Rohrblenden, statische Mischer, Dispergatoren und/oder beispielsweise Pumpen realisiert werden. Dabei erfolgt die Reaktionsführung bevorzugt in einer Pfropfenströmung mit geringer Rückvermischung. Dies kann somit beispielsweise in Rohrreaktoren geschehen.

Bei der Dispergierung der organischen Phase in die wässrige Phase oder der wässrigen Phase in die organische Phase mittels Dispergator kann eine Öl-in-Wasser- oder eine Wasser-in-Öl-Dispersion erzeugt werden, wobei unter Öl die organische Phase zu verstehen ist. Bevorzugt wird bei der Dispergierung eine Öl-in-Wasser-Dispersion erzeugt. Vorzugsweise wird mittels des Dispergators kontinuierlich die organische Phase in die wässrige Phase dispergiert.

Definitionsgemäß handelt es sich bei einer Öl-in-Wasser-Dispersion um eine solche, bei der Wasser die äußere (kontinuierliche) und Öl die innere (dispergierte) Phase bildet, d.h. Öltröpfchen in Wasser verteilt sind. Bei einer Wasser-in-Öl-Dispersion handelt es sich folglich um eine solche, bei der Öl die äußere und Wasser die innere Phase bildet.

Die organische Phase umfasst ein oder mehrere Lösungsmittel.

Geeignete Lösungsmittel sind aromatische und/oder aliphatische chlorierte Kohlenwasserstoffe, bevorzugt Dichlormethan, Trichlorethylen, 1,1,1-Trichlorethan, 1,1,2-Trichlorethan und Chlorbenzol und deren Gemische. Es können jedoch auch aromatische Kohlenwasserstoffe wie Benzol, Toluol, m-/p-/o-Xylol oder aromatische Ether wie Anisol allein, im Gemisch oder zusätzlich oder im Gemisch mit chlorierten Kohlenwasserstoffen verwendet werden, bevorzugt sind Dichlormethan und Chlorbenzol und deren Gemische. Eine andere Ausführungsform des erfindungsgemäßen Verfahrens verwendet Lösungsmittel, welche Polycarbonat nicht lösen, sondern nur anquellen. Es können daher auch Nichtlösungsmittel für Polycarbonat in Kombination mit Lösungsmitteln verwendet werden. Wobei dann als Lösungsmittel auch in der wässrigen Phase lösliche Lösungsmittel wie Tetrahydrofuran, 1,3- oder 1,4-Dioxan oder 1,3-Dioxolan verwendet werden können, wenn der Lösungsmittelpartner die zweite organische Phase bildet.

Die organische Phase des Schritts (a) umfasst neben dem mindestens einen Lösungsmittel zusätzlich zumindest Phosgen und gegebenenfalls mindestens einen Kettenabbrecher.

Dabei umfasst die organische Phase das erforderliche Phosgen vor der Erzeugung der Mischung bereits ganz oder teilweise. Bevorzugt enthält die organische Phase vor der Erzeugung der Mischung bereits das gesamte erforderliche Phosgen inklusive des verwendeten Phosgenüberschusses. Der Eintrag des Phosgens in die organische Phase kann gasförmig oder flüssig erfolgen. Der verwendete Überschuss an Phosgen in Schritt (a) gegenüber dem mindestens einen Dihydroxydiarylalkan beträgt bevorzugt 3 bis 20 mol-%, besonders bevorzugt 5 bis 18 mol-% und ganz besonders bevorzugt 7,5 bis 15,0 mol-%.

Zur Regelung des Molekulargewichtes kann in Schritt (a) gegebenenfalls der Zusatz von einem oder mehreren monofunktionellen Kettenabbrecher(n), wie Phenol oder Alkylphenolen, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern in der organischen Phase erforderlich sein. Solche Kettenabbrecher können aber auch zu jedem beliebigen Zeitpunkt der Synthese zugesetzt werden, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Beispielsweise kann auch in Schritt (b) mindestens ein Kettenabbrecher zugegeben werden.

Vorzugsweise werden der oder die Kettenabbrecher unmittelbar vor Schritt (c) zugegeben. Dies erfolgt vorzugsweise an einem Ort oder zu einem Zeitpunkt, an oder zu dem kein Phosgen mehr vorliegt, aber der mindestens eine Katalysator noch nicht zudosiert wurde, d.h. sie können vor dem mindestens einen Katalysator, mit dem mindestens einen Katalysator zusammen oder parallel dazu zudosiert werden. Die Kettenabbrecher(n) können als Schmelze, in einer alkalisch wässrigen Lösung, oder in einer Lösung im für die Reaktion verwendeten organischen Lösemittel zudosiert werden. Bevorzugt ist die Lösung des/der Kettenabbrecher(s) im verwendeten organischen Lösemittel, wodurch der/die Kettenabbrecher(n) in die organische Phase in die Nähe von den reaktiven Säurechlorid-endgruppen gebracht wird/werden.

In einer besonders bevorzugten Ausführungsform des erfindungsgemäßen Verfahrens wird Phenol als Kettenabbrecher eingesetzt. Vorzugsweise wird das Phenol vor Schritt (c) in Form einer Lösung umfassend wenigstens ein organisches Lösungsmittel und das Phenol in einer Konzentration von 5 bis 40 Gew.-%, bevorzugt 10 bis 25 Gew.-%, eingesetzt. In dieser Ausführungsform wird die wässrige Phase am Ende der Reaktion (d.h. in Schritt (b)) vorzugsweise auf einen pH Wert von 11,3 bis 11,6 eingestellt. Vorzugsweise erfolgen die Zugabe des Phenols und die Einstellung des pH-Werts auf 11,3 bis 11,6 vor Zugabe des Katalysators.

Die wässrige Phase des Schritts (a) umfasst zumindest mindestens ein Dihydroxydiarylalkan, Alkalilauge und gegebenenfalls mindestens einen Kettenabbrecher.

Geeignete Dihydroxydiarylalkane -sind vorzugsweise solche der allgemeinen Formel (I) ,

HO-Z-OH (I)

worin Z ein divalenter organischer Rest mit 6 bis 30 Kohlenstoffatomen ist, der eine oder mehrere aromatische Gruppen enthält. Beispiele solcher Verbindungen, die in das erfindungsgemäße Verfahren eingesetzt werden können sind Dihydroxydiarylalkane wie Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen. Bevorzugte Dihydroxydiarylalkane sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexyn und 1,1-Bis-(4-hydroxyphenyl)-3,3,5-trimethylcyclohexan (Bisphenol TMC).

Besonders bevorzugte Dihydroxydiarylalkane sind 4,4'-Dihydroxydiphenyl, 1,1-Bis-(4-hydroxyphenyl)-phenyl-ethan, 2,2-Bis-(4-hydroxyphenyl)-propan (Bisphenol A (BPA)), 2,2-Bis(3,5-dimethyl-4-hydroxyphenyl)-propan, 1, 1 -Bis-(4-hydroxyphenyl)-cyclohexan und 1,1-Bis-(4-hydroxyphenyl)-3,3,5-trimethylcyclohexan (Bisphenol TMC).

Unter Alkalilauge ist im Rahmen der Erfindung bevorzugt Natronlauge, Kalilauge oder Mischungen aus diesen, besonders bevorzugt Natronlauge zu verstehen.

Ebenso kann in der wässrigen Phase des Schritts (a) auch mindestens einer der bereits oben beschriebenen Kettenabbrecher enthalten sein.

Die wässrige Phase des Schritts (a)umfasst bevorzugt zwischen 1 und 30 Gew.-%, besonders bevorzugt zwischen 3 und 25 Gew.-%, ganz besonders bevorzugt zwischen 8 und 17 Gew.-% Dihydroxydiarylalkan bezogen auf das Gesamtgewicht der wässrigen Phase, wobei die Konzentration dieser wässrigen Lösung bezüglich der Summe der Dihydroxydiarylalkane, nicht als Alkalisalz sondern als freies Dihydroxydiarylalkan gerechnet wird..

In Schritt (b) des erfindungsgemäßen Verfahrens erfolgt die Umsetzung des Phosgens mit dem mindestens einem Dihydroxydiarylalkan in der aus Schritt (a) erhaltenen Mischung, gegebenenfalls unter Zugabe mindestens eines Kettenabbrechers und/oder weiterer Alkalilauge.

Auch in diesem Schritt können bevorzugt die bereits oben beschriebenen Kettenabbrecher und /oder oben beschriebene Alkalilauge zugegeben werden.

Erfindungsgemäß kann bereits im Schritt (a) eine Umsetzung des Phosgens mit dem mindestens einem Dihydroxydiarylalkan stattfinden, so dass die Schritte (a) und (b) nicht ohne Weiteres zeitlich voneinander zu trennen sind. Dennoch findet Schritt (a) immer zeitlich vor Schritt (b) statt. Dabei kann in einer Ausführungsform Schritt (b) trotz Überschneidung mit Schritt (a) dennoch länger durchgeführt werden, so dass anschließend nur noch Schritt (b) (ohne weitere Überschneidung mit Schritt (a)) erfolgt.

In Schritt (a) und/oder Schritt (b) können gegebenenfalls ein oder mehrere Verzweiger oder Verzweigermischungen der Synthese zugesetzt werden. Üblicherweise werden solche Verzweiger jedoch vor dem oder den Kettenabbrecher(n) zugesetzt. Beispielsweise werden als Verzweiger Trisphenole, Quarterphenole, Säurechloride von Tri- oder Tetracarbonsäuren oder auch Gemische der Polyphenole oder der Säurechloride verwendet.

Beispiele für als Verzweiger geeignete Verbindungen mit drei oder mehr als drei phenolischen Hydroxylgruppen sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Beispiele für sonstige als Verzweiger geeignete trifunktionelle Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Besonders bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Durch Schritt (b) erfolgt ein Aufbau von Oligocarbonaten. Dieser wird gemäß Stand der Technik beispielsweise in einem Umpumpreaktor durchgeführt; siehe z.B. EP 1 249463A1, US 2004/0158026A1, US 6,613,868 B2. Dabei können in diesem Umpumpreaktor das Mischen des eingebrachten Phosgens mit ebenfalls eingebrachtem Dinatriumsalz mindestens eines Dihydroxydiarylalkans, bevorzugt Bisphenol A (Schritt (a)) sowie die ersten Oligomerisierungsschritte (Schritt (b)) erfolgen. Entstehende Chlorformiatgruppen reagieren dabei mit vorliegenden Phenolatend-gruppen zu wachsenden Oligomeren, die unterschiedliche Endgruppen (Phenolat oder Chlorformiat bzw. aus beiden gemischte Spezies) enthalten. Durch die Einbringung ausreichender Misch- oder Dispersionsenergie wird eine Emulsion aus wässriger und organischer Phase gebildet. Das in der Mischung inhärent vorhandene Monomer, bevorzugt BPA wirkt hierbei als zusätzlich als Emulgator.

Schritt (b) erfolgt im alkalischen Milieu. Dieser Schritt ist eine exotherme Reaktion. Er wird erfindungsgemäß bevorzugt in einem Temperaturbereich von -5° C bis 100° C, besonders bevorzugt 15°C bis 80°C, ganz besonders bevorzugt 25 bis 65°C durchgeführt, wobei je nach Lösungsmittel oder Lösungsmittelgemisch gegebenenfalls unter Überdruck gearbeitet werden muss. Je nach verwendetem Reaktor kann bei unterschiedlichen Drücken gearbeitet werden. Beispielsweise kann bevorzugt bei einem Druck von 0,5 bis 20 bar (absolut) gearbeitet werden.

Im erfindungsgemäßen Schritt (c) erfolgt mindestens eine Zugabe mindestens eines Katalysators. Wie bereits oben beschrieben, können dabei mehrere Zugabe jeweils gleicher oder unterschiedlicher Katalysatoren oder Katalysatormischungen erfolgen. Dabei erfolgt der Schritt (c) vor Schritt (a) und/oder nach Schritt (b). In einer Ausführungsform, in der sich Schritt (a) mit Schritt (b) überschneidet, findet Schritt (a) dennoch zeitlich immer vor Schritt (b) statt, so dass die zeitliche Abfolge des Schrittes (c) eindeutig bestimmbar ist.

Dabei ist es bevorzugt, dass, wenn Schritt (c) vor Schritt (a) stattfindet, der mindestens eine Katalysator Teil der organischen Phase ist.

Besonders bevorzugt findet Schritt (c) nach Schritt (b), besonders bevorzugt unmittelbar nach Schritt (b) statt.

Erfindungsgemäß wird teilweise von einem "mindestens einen Katalysator enthaltenden System" gesprochen. Dieses System kann je nach Zugabezeitpunkt des mindestens einen Katalysators unterschiedlich sein. Wird der mindestens eine Katalysator zum Beispiel vor Schritt (a) zugegeben, so hat das System eine andere Zusammensetzung als wenn er nach Schritt (b) zugegeben wird, da vor Schritt (a) noch keine Oligocarbonate vorliegen, nach Schritt (b) aber schon. Der Fachmann kann somit dieses System auf Basis des Zugabezeitpunkts bestimmen. Besonders bevorzugt stellt das "mindestens einen Katalysator enthaltende System" die Reaktionsmischung dar, wie sie aus dem erfindungsgemäßen Schritt (b) resultiert.

Weiterhin bevorzugt ist es, dass das erfindungsgemäße Verfahren dadurch gekennzeichnet ist, dass nach dem Schritt (c1), bei dem über einen Zeitraum von 2 bis maximal 1200 s eine Mischenergie von mehr als 0,01 bis 20 J/kg eingetragen wird, ein weiterer Schritt (c2) folgt, bei dem 50 bis 500 J/kg Dispersionsenergie in größer als 0 bis 60 s in das Katalysator enthaltende System eingetragen wird. Bei dem Schritt (c1) handelt es sich bevorzugt um den oben beschriebenen erfindungsgemäßen Schritt der Katalysatorzugabe. Es hat sich als vorteilhaft herausgestellt, dass die Phase der geringeren Mischenergieeintragung gefolgt wird von einer Phase einer größeren Mischenergieeintragung. Insbesondere konnte festgestellt werden, dass der Restgehalt an Monomer im Polycarbonat durch diese Verfahrensführung weiter reduziert werden konnte. Trotz des Schrittes (c2) lassen sich überraschenderweise die organische und wässrige Phase gut trennen.

In Schritt (c2) wird 50 bis 500 J/kg, bevorzugt 100 bis 400 J/kg, besonders bevorzugt 200 bis 380 J/kg Dispersionsenergie in das System eingetragen. Dieser Eintrag erfolgt über einen Zeitraum von größer 0 bis 60 s, bevorzugt für 0,5 bis 30 s, besonders bevorzugt 1 bis 20 s. Die Eintragung der Dispersionsenergie erfolgt bevorzugt durch die im Stand der Technik beschriebenen, dem Fachmann bekannten Verfahren. Ganz besonders bevorzugt erfolgt die Eintragung der Dispersionsenergie durch eine Zentrifugalpumpe und/oder Zahnradpumpe.

Bei dieser Ausführungsform ist es besonders bevorzugt, dass der Schritt (c2) unmittelbar auf den Schritt (c1) folgt. Ebenso ist es bevorzugt, dass Schritt (c2) nach einer Zeit von bis zu 25 s auf den Schritt (c1) folgt. In dieser Zeit kann die Mischung beispielsweise durch eine Rohrleitung von Schritt (c1) dem Schritt (c2) zugeführt werden.

Erfindungsgemäß wird im Anschluss an die Durchführung der Schritte (a) bis (c) eine Mischung erhalten, welche überraschenderweise einen niedrigen Gehalt an Dihydroxydiarylalkan (Monomer) enthält. Dies zeigt, dass die Selektivität und auch die Ausbeute durch das erfindungsgemäße Verfahren gesteigert werden kann. Gleichzeitig weist die so erhaltene Mischung einen anderen Mischungszustand auf als Mischungen des Stands der Technik, da durch die reduzierte Menge an Dihydroxydiarylalkan weniger Emulgator vorhanden ist und somit eine andere Verteilung der organischen und wässrigen Phase resultiert. Zudem ist die Verteilung des restlichen Dihydroxydiarylalkans anders als im Stand der Technik, da erfindungsgemäß der Hauptteil in der wässrigen Phase zu finden ist, während im Stand der Technik der Hauptteil in der organischen Phase ist.

Daher betrifft die vorliegende Erfindung in einem weiteren Aspekt eine Mischung einer organischen und einer wässrigen Phase, umfassend Polycarbonat, erhalten durch ein Verfahren zur Herstellung von Polycarbonat nach dem Phasengrenzflächenverfahren, umfassend die Schritte
(a) Erzeugung einer Mischung einer organischen und einer wässrigen Phase, wobei die organische Phase zumindest Phosgen und gegebenenfalls mindestens einen Kettenabbrecher und die wässrige Phase zumindest mindestens ein Dihydroxydiarylalkan, Alkalilauge und gegebenenfalls mindestens einen Kettenabbrecher enthält,
(b) Umsetzung des Phosgens mit dem mindestens einem Dihydroxydiarylalkan in der aus Schritt (a) erhaltenen Mischung, gegebenenfalls unter Zugabe mindestens eines Kettenabbrechers und/oder weiterer Alkalilauge,
(c) mindestens eine Zugabe mindestens eines Katalysators, wobei der Schritt (c) vor Schritt (a) und/oder nach Schritt (b), bevorzugt nach Schritt (b) erfolgt,
(d) Erhalt einer Mischung einer organischen und wässrigen Phase, umfassend Polycarbonat, im Anschluss an Schritt (b) oder, wenn Schritt (c) nach Schritt (b) erfolgt, im Anschluss an Schritt (c), dadurch gekennzeichnet, dass unmittelbar nach der gegebenenfalls ersten Zugabe des mindestens einen Katalysators in Schritt (c) über einen Zeitraum von 2 bis 1200 s zwischen 0,01 und 20 J/kg Mischenergie in das mindestens einen Katalysator enthaltende System eingetragen wird.

Das Verfahren zur Herstellung von Polycarbonat nach dem Phasengrenzflächenverfahren entspricht dabei bevorzugt dem oben beschriebenen erfindungsgemäßen Verfahren. Bevorzugt enthält die erfindungsgemäße Mischung einer organischen und einer wässrigen Phase noch nicht umgesetzte Edukte und/oder den mindestens einen Katalysator.

In einem weiteren Aspekt betrifft die vorliegende Erfindung auch eine organische Phase, welche erhalten wird durch
(e) Abtrennen der organischen Phase aus der in Schritt (d) erhaltenen erfindungsgemäßen Mischung einer organischen und wässrigen Phase, umfassend Polycarbonat.

Wie bereits oben ausgeführt, umfasst diese abgetrennte organische Phase überraschend wenig restliches Dihydroxydiarylalkan. Dies führt dazu, dass die Aufarbeitung der organischen Phase besonders effizient, z. B. schnell und ökonomisch durchgeführt werden kann. Bevorzugt umfasst die organische Phase weniger als 20 mg/kg, besonders bevorzugt weniger als 15 mg/kg und ganz besonders bevorzugt weniger als 13 kg/mg des mindestens einen Dihydroxydiarylalkans.

Die erfindungsgemäße organische Phase enthält bevorzugt 12 bis 22 Gew. % Polycarbonate mit einem mittleren Molekulargewichtsmittel Mw von größer als 45000 g/mol, bezogen auf das Gesamtgewicht der organischen Phase, und bevorzugt 12 bis 40 Gew.-%, besonders bevorzugt 15 bis 30 Gew.-% Polycarbonate mit einem mittleren Molekulargewichtsmittel Mw von 45000 g/mol oder kleiner, bezogen auf das Gesamtgewicht der organischen Phase. Dabei kann es bei höheren Konzentrationen notwendig sein, die Lösungen zu temperieren.

Es ist es des Weiteren bevorzugt, dass die wässrige Phase, welche von der erfindungsgemäßen organischen Phase aus der erfindungsgemäßen Mischung einer organischen und wässrigen Phase abgetrennt wird, weniger als 20 mg/kg, besonders bevorzugt weniger als 15 mg/kg und ganz besonders bevorzugt weniger als 10 kg/mg des mindestens einen Dihydroxydiarylalkans umfasst.

Zur Abtrennung in Schritt (e) ist es bevorzugt, dass man das ausreagierte, höchstens noch Spuren, bevorzugt weniger als 2 ppm an Chlorkohlensäureestern enthaltende Reaktionsgemisch zur Phasentrennung absitzen lässt. Die wässrige alkalische Phase wird gegebenenfalls ganz oder teilweise zurück in die Polycarbonatsynthese als wässrige Phase geleitet oder aber der Abwasseraufarbeitung zugeführt, wo Lösungsmittel- und Katalysatoranteile abgetrennt und gegebenenfalls in die Polycarbonatsynthese rückgeführt werden. In einer anderen Variante der Aufarbeitung wird nach Abtrennung der organischen Verunreinigungen, insbesondere Lösungsmitteln und Polymerresten, und gegebenenfalls nach der Einstellung eines bestimmten pH-Wertes, z.B. durch Natronlaugezugabe, das Salz abgetrennt, welches z. B. der Chloralkalielektrolyse zugeführt werden kann, während die wässrige Phase gegebenenfalls wieder der Polycarbonatsynthese zugeführt wird.

Die erfindungsgemäße organische, das Polycarbonat enthaltende Phase kann anschließend zur Entfernung der Kontaminationen alkalischer, ionischer oder katalytischer Art auf verschiedene, dem Fachmann bekannte Weisen gereinigt werden.

Die erfindungsgemäße organische Phase enthält in der Regel auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie des oder der Katalysator(en). Diese Anteile sind jedoch geringer als in entsprechenden Phasen des Stands der Technik. Nach dieser groben Abtrennung der alkalischen, wässrigen Phase kann die organische Phase ein oder mehrmals mit verdünnten Säuren, Mineral-, Carbon- Hydroxycarbon-und/oder Sulfonsäuren gewaschen werden. Bevorzugt sind wässrige Mineralsäuren insbesondere Salzsäure, phosphorige Säure, Phosphorsäure oder Mischungen dieser Säuren. Die Konzentration dieser Säuren sollte dabei vorzugsweise im Bereich 0,001 bis 50 Gew. %, bevorzugt 0,01 bis 5 Gew. % liegen. Weiterhin kann die organische Phase mit entsalztem oder destilliertem Wasser wiederholt gewaschen werden. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen. Dabei kann das Waschwasser zwischen den Waschschritten gegebenenfalls unter Verwendung von aktiven oder passiven Mischorganen zudosiert werden. Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas, Phosphorsäure oder phosphorige Säure verwendet, die gegebenenfalls auch als Mischungen eingesetzt werden können. Die so erhaltene gereinigte Polycarbonatlösung sollte vorzugsweise nach dem letzten Trennvorgang nicht mehr als 5 Gew. %, bevorzugt weniger als 1 Gew. %, ganz besonders bevorzugt weniger als 0,5 Gew. % Wasser enthalten.

Aus dieser erfindungsgemäßen organischen Phase lässt sich durch dem Fachmann bekannte Schritte Polycarbonat isolieren. Bevorzugt weist dieses Polycarbonat ein mittleres Molekulargewichtsmittel Mw von 15000-200000 g/mol auf. Bei den im Rahmen dieser Anmeldung angegebenen mittleren Molekulargewichten handelt es sich um Gewichtsmittel (Mw), welche durch Gelpermeationschromotographie (GPC, Waters "Mixed Bed" Kolonnen) in Methylenchlorid als Eluens (unter Verwendung von BPA-Homopolycarbonat-Standard mit einem Mw von 31.000 g/mol) ermittelt werden.

Erfindungsgemäß werden unter Polycarbonaten sowohl Homopolycarbonate als auch Copolycarbonate verstanden. Im Falle der erfindungsgemäßen Herstellung von Homopolycarbonaten wird nur ein Dihydroxydiarylalkan im erfindungsgemäßen Verfahren eingesetzt, im Falle der erfindungsgemäßen Herstellung von Copolycarbonaten werden mehrere Dihydroxydiarylalkane eingesetzt.

Die Durchführung des erfindungsgemäßen Verfahrens kann kontinuierlich oder diskontinuierlich, bevorzugt kontinuierlich geschehen. Die Reaktion an sich, bevorzugt Schritt (b), kann daher in Rührkesseln, Rohrreaktoren, Umpumpreaktoren oder Rührkesselkaskaden oder deren Kombination erfolgen, wobei durch Verwendung der bereits erwähnten Mischorgane sicherzustellen ist, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält. Die erfindungsgemäß bevorzugten Ausführungsformen der Vorrichtungen zur Katalysatorzugabe wurden bereits oben beschrieben.

Ein weiterer Aspekt der Erfindung betrifft eine Verwendung von zwischen 0,01 und 20 J/kg Mischenergie für eine Zeit von 2 bis 1200 s zur Verteilung mindestens eines Katalysators in einem System, umfassend eine organische Phase und eine wässrige Phase, wobei
die organische Phase zumindest Phosgen und gegebenenfalls mindestens einen Kettenabbrecher und
die wässrige Phase zumindest mindestens ein Dihydroxydiarylalkan, Alkalilauge und gegebenenfalls mindestens einen Kettenabbrecher enthält.

Wie bereits oben näher erläutert, war es überraschend, dass eine solch geringe Mischenergie zu einer Verbesserung des Verfahrens in Bezug auf Selektivität, Ausbeute und Trennbarkeit der Phasen führt. Dabei gelten für die erfindungsgemäße Verwendung sämtliche oben beschriebene Bevorzugungen.

Insbesondere ist es bevorzugt, dass die erfindungsgemäße Verwendung dadurch gekennzeichnet ist, dass nach dem Schritt (c1), bei dem über einen Zeitraum von 2 bis 1200 s eine Mischenergie von zwischen 0,01 und 20 J/kg eingetragen wird, ein weiterer Schritt (c2) folgt, bei dem 50 bis 500 J/kg Dispersionsenergie in größer als 0 bis weniger als 60 s in das Katalysator enthaltende System eingetragen wird. Ebenso ist es bevorzugt, dass der Schritt (c2) unmittelbar auf den Schritt (c1) folgt.

### Beispiele

Im Folgenden wird als Dihydroxydiarylalkan 2,2'-bis-(4-hydroxyphenyl)-propan (Bisphenol A, BPA) eingesetzt, das Lösungsmittel der organischen Phase ist ein Gemisch aus ca. 50 Gew.-% Methylenchlorid und 50 Gew.-% Monochlorbenzol. In allen Beispielen wurde ein Polycarbonat mit einem gewichtsmittlerem Molekulargewicht von 25.000 bis 26.000 g/mol hergestellt, gemessen per GPC (Waters "Mixed Bed" Kolonnen in Methylenchlorid mit BPA-Homopolycarbonat-Standard mit einem Mw von 31.000 g/mol).

Die Beispiele wurden in einer Laborversuchsanlage durchgeführt. Dabei wurden unterschiedliche Mischenergien durch die angegebenen Mischorgane in das System eingeführt. Die beschriebenen Apparate wurden jeweils mittels eines 6 mm Teflonschlauchs mit einander verbunden.

Als Vorrichtungen für die einzelnen Verfahrensschritte wurden verwendet:
Die kontinuierlichen Laborversuche wurden durchgeführt in einer Kombination von Pumpen, ggf. einem statischen Mischer, und ggf. gerührten Reaktoren. Bei allen Experimenten wurden 70,1 g/h gasförmiges Phosgen in einem T-Stück in 772 g/h organischem Lösemittel (1:1 Methylenchlorid / Chlorbenzol) bei -7 °C gelöst. Die Menge an Lösungsmittel wurde berechnet, um am Ende eine 15 Gew% Polycarbonat Lösung zu erhalten. Die kontinuierlich zugeführte Phosgenlösung wurde in einem weiteren T-Stück mit 912 g/h 15 Gew% wässriger, alkalischer BPA Lösung (2 Mol NaOH pro Mol BPA), welche auf 30°C vorgewärmt war, in Kontakt gebracht. Diese BPA Lösung wurde durch einen Edelstahlfilter in der Phosgenlösung dispergiert (Porengröße von 60 µm, Verfahrensschritt a) ).

Das Reaktionsgemisch wurde in eine Fink HMR040 Mischpumpe geleitet, welche bei 25°C temperiert wurde, bis das Phosgen am Ende der Reaktionspumpe komplett abreagiert hatte. Nach dieser Pumpe wurden 3,29 g/h p-tert.-Butylphenol als Kettenabbrecher als 3 Gew%ige Lösung im gleichem Lösungsmittelgemisch wie oben zudosiert, und dieses Reaktionsgemisch wurde in einr weiteren HMR040 Pumpe bei 25°C mit 53,95 g/h. 32 Gew-%iger Natronlauge weiterreagieren gelassen, so dass der pH Wert am Ende des Reaktionssystem bei ca. 11,5 war (Verfahrensschritt b) ).

Standardmäßig folgten immer mindestens 2 Zahnradpumpen der Firma Ismatec (Idex Micropump, Spezifische Mischenergie ca. 75 J/Kg pro Pumpe), weiterhin gefolgt von der Dosierung von 0,679 g/h des Katalysators (10 Gew-% N-Ethylpiperidin, gelöst in Chlorbenzol) in einem T-Stück im Teflonschlauch. Nach diesem Teflonschlauch folgten die in Tabelle 1 angegebenen Mischorgane in angegebener Reihenfolge. Dies bedeutet, dass beispielsweise ein statischer Mischer oder ein Rührkessel folgen können (Verfahrensschritt c1) ). In den Vergleichsbeispielen folgte nur die vorher beschriebene Zahnradpumpe (siehe Tabelle 1). In einigen Beispielen folgten nach den angegebenen Mischorganen des Verfahrensschritts c1) weitere Mischorgane in der in Tabelle 1 angegebenen Reihenfolge (Verfahrensschritt c2),

In einigen Experimenten wurde in Verfahrensschritt c) (sehe Tabelle 1) ein statischer Mischer aus Glas mit Edelstahleinbauten eingesetzt, der 25 Sekunden Verweilzeit hatte und einen Druckabbau von ca. 50 mbar (Spezifische Mischenergie von ca. 5 J/Kg).

In anderen Experimenten wurde in Verfahrensschritt c) ein überflutet gefahrener Rührkessel aus Glas mit 600 Sekunden Verweilzeit mit Strömungbrechern aus Edelstahl an unterschiedlichen Stellen eingesetzt (siehe Tabelle 1)- Dieser Rührkessel war mit einem Standard IKA Laborrührer versehen(Spezifische Mischenergie von ca. 2,5 J/Kg).

Insgesamt wurden kontinuierlich 156 g Polycarbonat in organischer Lösung erhalten, zusammen mit der wässriger Phase aus der Reaktion zu einem Phasentrenngefäß geführt, um diese zu trennen. Die Polycarbonatlösung wurde mit 10 Gew% HCl gewaschen und unter normalen Druck und Raumtemperatur getrocknet, um Restmonomere nicht zu verdampfen. Die wässrige Phase aus der Reaktion wurde als solches analysiert ohne weitere Aufarbeitung.

Nach der Phasentrennung wurden folgende Werte ermittelt. Dabei wurde der BPA-Gehalt sowohl in der organischen als auch der wässrigen Phase mittels Hochleistungsflüssigkeitschromatographie in Acetonitril/Wasser bestimmt. Dabei wurde eine Zorbax SB18 4.6 ^{∗} 50 mm, 3.5µm Säule verwendet.

**Tabelle 1**

| | Verfahrensschritt (c1) | Verfahrensschritt (c2) | Phosgenüberschuss | NaOH Konzentration | Summe unreagiertes BPA [mg/kg] | BPA in organisc her Phase [mg/kg] | BPA in wässriger Phase [mg/kg] |
|---|---|---|---|---|---|---|---|
| Vergleich 1 | Kat - ZP | ZP | 16,1 % | 32% | 131 | 116 | 15 |
| Versuch 1 | Kat - RK | ZP | 16,1 % | 32 % | 7,6 | 2,7 | 4,9 |
| Vergleich 2 | Kat - ZP | RK - ZP | 16,1% | 32 % | 58 | 19 | 39 |
| Versuch 2 | Kat - SM | ZP-ZP | 16,1% | 32 % | 23 | 13 | 10 |
| Vergleich 3 | Kat - ZP | ZP | 16,1% | 15 % | 22 | 4 | 18 |
| Versuch 3 | Kat - RK | ZP | 16,1% | 15 % | 8,5 | 0,7 | 7,8 |

Erläuterung der in der Tabelle verwendeten Abkürzungen:
Kat: steht für die Katalysatorzugabe
   - (Bindestrich): steht für das unmittelbar anschließende Mischorgan
RK: steht für den oben angegeben Rührkessel
ZP: steht für die oben beschriebene Zahnradpumpe
SM: steht für den oben beschriebenen statischen Mischer

Wie aus der Tabelle 1 ersichtlich, führt die Änderung der Verfahrensführung, bei der zunächst eine niedrige Mischenergie und dann eine erhöhte Dispersionsenergie unmittelbar nach Katalysatorzugabe angewendet wird (Versuch 1 bis 3) zu einer Reduzierung des Gesamtgehalts an BPA sowohl in der wässrigen als auch in der organischen Phase im Vergleich zu der umgekehrten Reihenfolge (erst hohe Dispersionsenergie, dann niedrige Mischenergie wie in Vergleich 1 bis 3 gezeigt). Dies zeigt, dass die Selektivität der Reaktion erhöht werden konnte. Gleichzeitig ist auch ersichtlich, dass, wenn weniger BPA in den Phasen vorhanden ist, diese einfacher zu trennen sind, da BPA als Emulgator fungiert.

## Patentansprüche

1. Verfahren zur Herstellung von Polycarbonat nach dem Phasengrenzflächenverfahren in Gegenwart mindestens eines Katalysators, **dadurch gekennzeichnet, dass** unmittelbar nach der gegebenenfalls ersten Zugabe des mindestens einen Katalysators innerhalb eines Zeitraums von 2 bis 1200 s 0,01 bis 20 J/kg Mischenergie in das mindestens einen Katalysator enthaltende System eingetragen wird.

2. Verfahren nach Anspruch 1, **dadurch gekennzeichnet, dass** die 0,01 bis 20 J/kg Mischenergie mittels mindestens eines statischen Mischers und/oder mindestens eines dynamischen Mischers in das Katalysator enthaltende System eingetragen wird.

3. Verfahren nach einem der Ansprüche 1 oder 2, **dadurch gekennzeichnet, dass** das Verfahren kontinuierlich betrieben wird.

4. Verfahren nach einem der Ansprüche 1 bis 3, **dadurch gekennzeichnet, dass** der mindestens eine Katalysator ausgewählt wird aus der Gruppe, bestehend aus einem tertiären Amin und einem Organophosphin.

5. Verfahren nach einem der Ansprüche 1 bis 4, **dadurch gekennzeichnet, dass** das Verfahren die Schritte
(a) Erzeugung einer Mischung einer organischen und einer wässrigen Phase, wobei
die organische Phase zumindest Phosgen und gegebenenfalls mindestens einen Kettenabbrecher und
die wässrige Phase zumindest mindestens ein Dihydroxydiarylalkan, Alkalilauge und gegebenenfalls mindestens einen Kettenabbrecher enthält,
(b) Umsetzung des Phosgens mit dem mindestens einem Dihydroxydiarylalkan in der aus Schritt (a) erhaltenen Mischung, gegebenenfalls unter Zugabe mindestens eines Kettenabbrechers und/oder weiterer Alkalilauge und
(c) mindestens eine Zugabe mindestens eines Katalysators
umfasst, wobei der Schritt (c) vor Schritt (a) und/oder nach Schritt (b) erfolgt.

6. Verfahren nach einem der Ansprüche 1 bis 5, **dadurch gekennzeichnet, dass** nach dem Schritt (c1), bei dem über einen Zeitraum von 2 bis maximal 1200 s eine Mischenergie von mehr als 0,01 bis 20 J/kg eingetragen wird, ein weiterer Schritt (c2) folgt, bei dem 50 bis 500 J/kg Dispersionsenergie in größer als 0 bis 60 s in das Katalysator enthaltende System eingetragen wird.

7. Verfahren nach Anspruch 6, **dadurch gekennzeichnet, dass** der Schritt (c2) unmittelbar auf den Schritt (c1) folgt.

8. Verfahren nach einem der Ansprüche 5 bis 7, **dadurch gekennzeichnet, dass** in Schritt (a) der Überschuss des Phosgens gegenüber dem mindestens einen Dihydroxydiarylalkan 3 bis 20 mol-% beträgt.

9. Verfahren nach einem der Ansprüche 1 bis 8, **dadurch gekennzeichnet, dass** der mindestens eine Katalysator bei der gegebenenfalls ersten Zugabe in Form einer Lösung zugegeben wird.

10. Verfahren nach einem der Ansprüche 1 bis 9, **dadurch gekennzeichnet, dass** die Temperatur unmittelbar nach der gegebenenfalls ersten Zugabe des mindestens einen Katalysators 35 bis 45 °C beträgt.

11. Mischung einer organischen und einer wässrigen Phase, umfassend Polycarbonat, erhalten durch ein Verfahren zur Herstellung von Polycarbonat nach dem Phasengrenzflächenverfahren, umfassend die Schritte
(a) Erzeugung einer Mischung einer organischen und einer wässrigen Phase, wobei
die organische Phase zumindest Phosgen und gegebenenfalls mindestens einen Kettenabbrecher und
die wässrige Phase zumindest mindestens ein Dihydroxydiarylalkan, Alkalilauge und gegebenenfalls mindestens einen Kettenabbrecher enthält,
(b) Umsetzung des Phosgens mit dem mindestens einem Dihydroxydiarylalkan in der aus Schritt (a) erhaltenen Mischung, gegebenenfalls unter Zugabe mindestens eines Kettenabbrechers und/oder weiterer Alkalilauge,
(c) mindestens eine Zugabe mindestens eines Katalysators, wobei der Schritt (c) vor Schritt (a) und/oder nach Schritt (b) erfolgt,
(d) Erhalt einer Mischung einer organischen und wässrigen Phase, umfassend Polycarbonat, im Anschluss an Schritt (b) oder, wenn Schritt (c) nach Schritt (b) erfolgt, im Anschluss an Schritt (c), **dadurch gekennzeichnet, dass** unmittelbar nach der gegebenenfalls ersten Zugabe des mindestens einen Katalysators in Schritt (c) über einen Zeitraum von 2 bis 1200 s zwischen 0,01 und 20 J/kg Mischenergie in das mindestens einen Katalysator enthaltende System eingetragen wird.

12. Organische Phase, erhalten durch
(e) Abtrennen der organischen Phase aus der in Schritt (d) erhaltenen Mischung einer organischen und wässrigen Phase, umfassend Polycarbonat, nach Anspruch 11.

13. Organische Phase nach Anspruch 12, **dadurch gekennzeichnet, dass** die organische Phase weniger als 20 mg/kg des mindestens einen Dihydroxydiarylalkans enthält.

14. Verwendung von zwischen 0,01 und 20 J/kg Mischenergie für eine Zeit von 2 bis 1200 s zur Verteilung mindestens eines Katalysators in einem System, umfassend eine organische Phase und eine wässrige Phase, wobei
die organische Phase zumindest Phosgen und gegebenenfalls mindestens einen Kettenabbrecher und
die wässrige Phase zumindest mindestens ein Dihydroxydiarylalkan, Alkalilauge und gegebenenfalls mindestens einen Kettenabbrecher enthält.

15. Verwendung nach Anspruch 14 , **dadurch gekennzeichnet, dass** nach dem Schritt (c1), bei dem über einen Zeitraum von 2 bis 1200 s eine Mischenergie von zwischen 0,01 und 20 J/kg eingetragen wird, ein weiterer Schritt (c2) folgt, bei dem 50 bis 500 J/kg Dispersionsenergie in größer als 0 bis weniger als 60 s in das Katalysator enthaltende System eingetragen wird.

## Claims

1. Process for preparing polycarbonate by the phase interface process in the presence of at least one catalyst, **characterized in that**, immediately after the optionally first addition of the at least one catalyst, from 0.01 to 20 J/kg of mixing energy is introduced into the system containing at least one catalyst within a time of from 2 to 1200 s.

2. Process according to Claim 1, **characterized in that** the from 0.01 to 20 J/kg of mixing energy is introduced into the catalyst-containing system by means of at least one static mixer and/or at least one dynamic mixer.

3. Process according to either of Claims 1 and 2, **characterized in that** the process is operated continuously.

4. Process according to any of Claims 1 to 3, **characterized in that** the at least one catalyst is selected from the group consisting of a tertiary amine and an organophosphine.

5. Process according to any of Claims 1 to 4, **characterized in that** the process comprises the steps
(a) production of a mixture of an organic phase and an aqueous phase, where
the organic phase contains at least phosgene and optionally at least one chain terminator and
the aqueous phase contains at least at least one dihydroxydiarylalkane, alkali metal hydroxide and optionally at least one chain terminator,
(b) reaction of the phosgene with the at least one dihydroxydiarylalkane in the mixture obtained from step (a), optionally with addition of at least one chain terminator and/or further alkali metal hydroxide and
(c) at least one addition of at least one catalyst, where step (c) is carried out before step (a) and/or after step (b).

6. Process according to any of Claims 1 to 5, **characterized in that** the step (c1) in which a mixing energy of from more than 0.01 to 20 J/kg is introduced over a time of from 2 to not more than 1200 s is followed by a further step (c2) in which from 50 to 500 J/kg of dispersing energy is introduced into the catalyst-containing system in from greater than 0 to 60 s.

7. Process according to Claim 6, **characterized in that** the step (c2) immediately follows step (c1).

8. Process according to any of Claims 5 to 7, **characterized in that**, in step (a), the excess of phosgene over the at least one dihydroxydiarylalkane is from 3 to 20 mol%.

9. Process according to any of Claims 1 to 8, **characterized in that** the at least one catalyst is added in the form of a solution in the optionally first addition.

10. Process according to any of Claims 1 to 9, **characterized in that** the temperature immediately after the optionally first addition of the at least one catalyst is from 35 to 45°C.

11. Mixture of an organic phase and an aqueous phase, comprising polycarbonate, obtained by a process for preparing polycarbonate by the phase interface process, comprising the steps
(a) production of a mixture of an organic phase and an aqueous phase, where
the organic phase contains at least phosgene and optionally at least one chain terminator and
the aqueous phase contains at least at least one dihydroxydiarylalkane, alkali metal hydroxide and optionally at least one chain terminator,
(b) reaction of the phosgene with the at least one dihydroxydiarylalkane in the mixture obtained from step (a), optionally with addition of at least one chain terminator and/or further alkali metal hydroxide,
(c) at least one addition of at least one catalyst, where step (c) is carried out before step (a) and/or after step (b),
(d) to give a mixture of an organic phase and an aqueous phase, comprising polycarbonate, subsequent to step (b) or, when step (c) is carried out after step (b), subsequent to step (c),
**characterized in that**, immediately after the optionally first addition of the at least one catalyst in step (c), from 0.01 to 20 J/kg of mixing energy is introduced into the system containing at least one catalyst over a time of from 2 to 1200 s.

12. Organic phase obtained by
(e) separation of the organic phase from the mixture obtained in step (d) of an organic phase and an aqueous phase, comprising polycarbonate, according to Claim 11.

13. Organic phase according to Claim 12, **characterized in that** the organic phase contains less than 20 mg/kg of the at least one dihydroxydiarylalkane.

14. Use of from 0.01 to 20 J/kg of mixing energy for a time of from 2 to 1200 s in order to distribute at least one catalyst in a system comprising an organic phase and an aqueous phase, where
the organic phase contains at least phosgene and optionally at least one chain terminator and
the aqueous phase contains at least at least one dihydroxydiarylalkane, alkali metal hydroxide and optionally at least one chain terminator.

15. Use according to Claim 14, **characterized in that** the step (c1), in which a mixing energy of from 0.01 to 20 J/kg is introduced over a time of from 2 to 1200 s, is followed by a further step (c2) in which from 50 to 500 J/kg of dispersing energy is introduced into the catalyst-containing system in from greater than 0 to less than 60 s.

## Revendications

1. Procédé pour la production de polycarbonate selon le procédé interfacial en présence d'au moins un catalyseur, **caractérisé en ce qu'**immédiatement après l'éventuellement première addition dudit au moins un catalyseur on introduit dans le système contenant au moins un catalyseur, en un espace de temps de 2 à 1 200 s, une énergie de mélange de 0,01 à 20 J/kg.

2. Procédé selon la revendication 1, **caractérisé en ce que** l'énergie de mélange de 0,01 à 20 J/kg est introduite dans le système contenant du catalyseur au moyen d'au moins un mélangeur statique et/ou d'au moins un mélangeur dynamique.

3. Procédé selon l'une quelconque des revendications 1 et 2, **caractérisé en ce que** le procédé est effectué en continu.

4. Procédé selon l'une quelconque des revendications 1 à 3, **caractérisé en ce que** ledit au moins un catalyseur est choisi dans le groupe constitué par une amine tertiaire et une organophosphine.

5. Procédé selon l'une quelconque des revendications 1 à 4, **caractérisé en ce que** le procédé comprend les étapes
a) production d'un mélange d'une phase organique et d'une phase aqueuse,
la phase organique contenant au moins du phosgène et éventuellement au moins un agent interrupteur de chaîne et
la phase aqueuse contenant pour le moins au moins un dihydroxydiarylalcane, une lessive alcaline et éventuellement au moins un agent interrupteur de chaîne
b) mise en réaction du phosgène avec ledit au moins un dihydroxydiarylalcane dans le mélange obtenu dans l'étape (a), éventuellement avec addition d'au moins un agent interrupteur de chaîne et/ou d'une quantité supplémentaire de lessive alcaline et
c) au moins une addition d'au moins un catalyseur l'étape (c) ayant lieu avant l'étape (a) et/ou après l'étape (b).

6. Procédé selon l'une quelconque des revendications 1 à 5, **caractérisé en ce qu'**après l'étape (c1), dans laquelle on introduit en un espace de temps de 2 à au maximum 1 200 s une énergie de mélange de plus de 0,01 à 20 J/kg, fait suite une nouvelle étape (c2), dans laquelle on introduit dans le système contenant du catalyseur, en plus de 0 à 60 s, une énergie de dispersion de 50 à 500 J/kg.

7. Procédé selon la revendication 6, **caractérisé en ce que** l'étape (c2) fait immédiatement suite à l'étape (c1) .

8. Procédé selon l'une quelconque des revendications 5 à 7, **caractérisé en ce que** dans l'étape (a) l'excès du phosgène par rapport audit au moins un dihydroxydiarylalcane vaut de 3 à 20 % en moles.

9. Procédé selon l'une quelconque des revendications 1 à 8, **caractérisé en ce que** ledit au moins un catalyseur dans l'éventuellement première addition est ajouté sous forme d'une solution.

10. Procédé selon l'une quelconque des revendications 1 à 9, **caractérisé en ce que** la température immédiatement après l'éventuellement première addition dudit au moins un catalyseur vaut de 35 à 45 °C.

11. Mélange d'une phase organique et d'une phase aqueuse, comprenant du polycarbonate, obtenu par un procédé pour la préparation de polycarbonate selon le procédé interfacial, comprenant les étapes
(a) production d'un mélange d'une phase organique et d'une phase aqueuse,
la phase organique contenant au moins du phosgène et éventuellement au moins un agent interrupteur de chaîne et
la phase aqueuse contenant pour le moins au moins un dihydroxydiarylalcane, une lessive alcaline et éventuellement au moins un agent interrupteur de chaîne
(b) mise en réaction du phosgène avec ledit au moins un dihydroxydiarylalcane dans le mélange obtenu dans l'étape (a), éventuellement avec addition d'au moins un agent interrupteur de chaîne et/ou d'une quantité supplémentaire de lessive alcaline,
c) au moins une addition d'au moins un catalyseur, l'étape (c) ayant lieu avant l'étape (a) et/ou après l'étape (b),
d) obtention d'un mélange d'une phase organique et d'une phase aqueuse, comprenant du polycarbonate, à la suite de l'étape (b) ou, lorsque l'étape (c) a lieu après l'étape (b), à la suite de l'étape (c),
**caractérisé en ce qu'**immédiatement après l'éventuellement première addition dudit au moins un catalyseur dans l'étape (c) on introduit dans le système contenant au moins un catalyseur, en un espace de temps de 2 à 1 200 s, une énergie de mélange comprise entre 0,01 à 20 J/kg.

12. Phase organique, obtenue par
(e) séparation de la phase organique à partir du mélange d'une phase organique et d'une phase aqueuse, obtenu dans l'étape (d), comprenant du polycarbonate, selon l'étape 11.

13. Phase organique selon la revendication 12, **caractérisée en ce que** la phase organique contient moins de 20 mg/kg dudit au moins un dihydroxydiarylalcane.

14. Utilisation d'énergie de mélange comprise entre 0,01 et 20 J/kg pendant une durée de 2 à 1 200 s pour la distribution d'au moins un catalyseur dans un système comprenant une phase organique et une phase aqueuse,
la phase organique contenant au moins du phosgène et éventuellement au moins un agent interrupteur de chaîne et
la phase aqueuse contenant pour le moins au moins un dihydroxydiarylalcane, une lessive alcaline et éventuellement au moins un agent interrupteur de chaîne.

15. Utilisation selon la revendication 14, **caractérisée en ce qu'**après l'étape (c1), dans laquelle on introduit en un espace de temps de 2 à 1 200 s une énergie de mélange comprise entre 0,01 à 20 J/kg, fait suite une nouvelle étape (c2), dans laquelle on introduit dans le système contenant du catalyseur, en plus de 0 à moins de 60 s, une énergie de dispersion de 50 à 500 J/kg.
